# EUROPÄISCHE PATENTSCHRIFT

(11) **EP 2 982 523 B1**
(45) Veröffentlichungstag und Bekanntmachung des Hinweises auf die Patenterteilung: **28.06.2017**
(21) Anmeldenummer: 15176990.8
(22) Anmeldetag: 16.07.2015
(51) Int. Cl.: B60C 23/04

(54) **UNIVERSELLER REIFENDRUCKSENSOR**
UNIVERSAL TIRE PRESSURE SENSOR
CAPTEUR DE PRESSION DE PNEU UNIVERSEL

(30) Priorität: 08.08.2014 DE 102014111324; 21.08.2014 DE 102014111966
(43) Veröffentlichungstag der Anmeldung: 10.02.2016
(73) Patentinhaber: Huf Hülsbeck & Fürst GmbH & Co. KG, 42551 Velbert (DE)
(72) Erfinder: WAGNER, Markus, 71638 Ludwigsburg (DE); MÜLLER, Benjamin, 76185 Karlsruhe (DE)
(74) Vertreter: Zenz Patentanwälte Partnerschaft mbB

(56) Entgegenhaltungen:
- EP-A2- 1 623 849
- WO-A1-2012/162172

## Beschreibung

Die Erfindung betrifft einen universellen Reifendrucksensor. Insbesondere betrifft die Erfindung einen Reifendrucksensor, der in einfacher Weise zur Kommunikation mit einer Vielzahl von fahrzeugseitigen Reifendruckkontrollsystemen (TPMS) konfigurierbar ist.

Automatische Reifendruckkontrollsysteme sind im Stand der Technik bekannt. Der Einsatz solcher Systeme unterstützt Fahrer dabei, immer mit dem korrekten Reifenfülldruck zu fahren, da der Fahrer bei Abweichung vom richtigen Druck durch eine entsprechende Warnmeldung im Fahrgastraum informiert wird. Der richtige Reifendruck hat sowohl Einfluss auf die Sicherheit, die optimale Fahrdynamik und auch den Fahrkomfort.

Sogenannte direkte Reifendruckkontrollsysteme arbeiten besonders präzise. Dabei erfassen Reifendrucksensoren an jedem Rad den Reifendruck und ggf. weitere Reifeninformationen, z.B. die Temperatur. Diese Informationen werden zusammen mit einer Kennung des Reifendrucksensors per Funksignal an ein Steuergerät im Fahrzeug gesendet. Beispielsweise kann eine solche Datenübertragung im Bereich von 434 MHz oder 315 MHz (hochfrequente Kommunikation oder HF-Kommunikation) erfolgen.

Eine Kommunikation von der fahrzeugseitigen Steuereinheit mit den Reifendrucksensoren erfolgt bei sogenannten getriggerten Systemen nach Aussenden eines Abfragesignals durch das Steuergerät, diese Anforderung kann im niederfrequenten Bereich (z.B. 125 kHz) erfolgen. Aufgrund der niedrigen Frequenz ist die Reichweite eines niederfrequenten Signals, beispielsweise eines Bereiches um 125 kHz gering. Mit geeigneter Dimensionierung kann ein solcher steuergerätseitiger Triggersender so ausgelegt werden, dass die Reichweite nur wenige Meter beträgt, so dass nur die Reifen am eigenen Fahrzeug angesprochen werden. Es gibt sowohl Systeme mit mehreren Triggersendern als auch mit einem einzigen Triggersender.

Auf den Trigger antwortet der Reifendrucksensor, wie oben erwähnt, drahtlos, z.B. mit einem Datenprotokoll im Hochfrequenzbereich.

Auch Systeme die gänzlich ohne Trigger auskommen und die Daten in Abhängigkeit von Situationsveränderungen von den Reifensensoren übermitteln sind bekannt und üblich.

Ein Verfahren und System zur drahtlosen Reifendrucküberwachung ist beispielsweise aus der EP 2 280 837 B1 bekannt.

Ein anderes Überwachungsverfahren ist in der WO 2013/022435 beschrieben.

Die Druckschrift US 2005/0104722 A1 schreibt einen sogenannten universellen Reifendrucksensor.

Aus dem Dokument EP 1 623 849 A1 ist ein Reifendrucksensor mit einem Piezo-Generator und zuschaltbaren Funktionsmodulen gemäß dem Oberbegriff des Anspruchs 1 bekannt.

Reifendrucksensoren enthalten irgendeine Art von Energiequelle oder Energiespeicher, beispielsweise eine Batterie oder einen Piezo-Generator. Außerdem sind ein Drucksensor und optional ein Temperatursensor vorgesehen, welche mit einem Mikrocontroller gekoppelt sind. Die üblichen Reifendrucksensoren weisen dabei eine Hochfrequenz-Sendeeinheit mit einer zugehörigen Antenne und eine Niederfrequenz-Empfangseinheit mit einer zugehörigen Spule auf. Allerdings können auch Systeme mit ausschließlich hochfrequenter Empfangs-/Sendetechnik realisiert werden. Ggf. sind auch noch Beschleunigungssensoren und Schwingquarze in dem Sensoraufbau vorgesehen. Zahlreiche der Komponenten können zu einer standardisierten integrierten Schaltung, einer sogenannten Sensor-IC integriert sein.

Trotz der Einheitlichkeit der Komponenten eines Reifendrucksensors sind herstellerabhängig die Sensoren hinsichtlich der Aussendung von den erfassten Daten und sonstigen Kenndaten auf die Fahrzeugsysteme anzupassen. Beispielsweise haben unterschiedliche Fahrzeughersteller unterschiedliche Anforderungen hinsichtlich Trägerfrequenz, Modulation des Signals, Datenformaten oder Verschlüsselungstechniken der Signale.

In jüngerer Zeit wird versucht, mit einheitlichen Sensoren eine Vielzahl von Fahrzeugen abzudecken. Für derartige Systeme hat sich der Begriff Universalsensor (universal tire pressure sensor) etabliert. Regelmäßig wird hierbei zwischen programmierbaren Universalsensoren, mehrsprachigen (multiprotocol) Universalsensoren und konfigurierbaren Universalsensoren unterschieden.

Ein programmierbarer Universalsensor erhält durch eine umfassende meist drahtlos übertragene Programmierung, die einige 10 Sekunden bis zu einigen Minuten in Anspruch nehmen kann, eine vollständige, fahrzeugspezifische Programmierung. Die Dauer dieser Programmierung und die Anfälligkeit für Fehlübertragungen macht ein solches System angesichts der Vielzahl an zu montierenden Reifen in einer Werkstatt zu einem System mit geringer Akzeptanz.

Die sogenannten mehrsprachigen Universalsensoren sind im Gegensatz zum programmierbaren Universalsensor bereits fertig programmiert, so dass der umfassende Programmiervorgang entfällt. Allerdings passen die spezifischen Sendeprotokolle und sonstigen Sensorparameter für verschiedene Fahrzeuge nicht sämtlich in den Speicher eines Reifendrucksensors. Daher wird mit jedem Sensor eine Teilgruppe von Fahrzeugen abgedeckt, wobei der Sensor in diesen verschiedenen Konfigurationen nacheinander seine erfassten Informationen aussendet. Das Steuergerät versteht nur einen Teil der gesendeten Informationen, nämlich die zu ihm passenden Informationen, der Rest wird verworfen. Es ergibt sich, dass nur ein Bruchteil der vom Sensor ausgesendeten Informationen tatsächlich auch der Nachrichtenübermittlung dient, so dass ein stark erhöhter Energieverbrauch anfällt und außerdem durch die zahlreichen unnützen Nachrichten Störungen der Kommunikationsumgebung hervorgerufen werden.

Eine Weiterentwicklung ist entsprechend ein sogenannter konfigurierbarer Universalsensor, der von Anfang an mit einer Vielzahl von Sendeprotokollen und Parametern programmiert ist, aber noch einige entscheidende Informationen benötigt, bevor er die Kommunikation mit der fahrzeugseitigen Einrichtung aufnehmen kann. Es wird also aus einem Satz gespeicherter Konfigurationen eine passende ausgewählt, gemäß derer der Betrieb anschließend ausgeführt wird. Nach erfolgreicher Konfiguration sendet der einmal konfigurierte Universalsensor anschließend auch nur noch das passende Protokoll. Die zur Konfiguration erforderlichen Informationen umfassen nur einige wenige Informationen, die übermittelte Datenmenge ist entsprechend um Größenordnungen kleiner als bei einer vollständigen Programmierung. Es wird dem Sensor lediglich mitgeteilt, welche seiner gespeicherten Konfigurationen er zur Kommunikation verwerten soll.

Alle genannten Systeme weisen Nachteile auf. Einerseits ist bei einem von der übrigen Umgebung getrennten System eines Reifendrucksensors auf möglichst geringen Energieverbrauch zu achten und andererseits auf eine rasche Programmierung bei möglichst umfassender Abdeckung von Fahrzeugen durch ein einziges Sensormodel. Es wäre erstrebenswert, einen wirklich universellen Sensor ausbilden zu können, der außerdem einen geringen Energieverbrauch aufweist.

Diese Aufgabe wird gelöst durch einen Universalsensor mit den Merkmalen des Patentanspruchs 1 sowie ein Verfahren mit den Merkmalen des Anspruchs 6.

Gemäß der Erfindung weist der Universalsensor einen eingebauten, und mit dem Mikrokontroller des Sensor-IC's verdrahteten zusätzlichen Speicher auf.

Soweit in dieser Anmeldung von Sensor-IC die Rede ist, ist damit eine intergierte Schaltung gemeint, welche einen Mikrocontroller, die Druckmessfunktion und ggf. Kommunikationsschnittstellen aufweist. Es können auch weitere Sensoren auf dem Sensor-IC integriert sein, insbesondere Temperatursensoren oder Beschleunigungssensoren. Empfangsspulen oder Sendeantennen können ebenfalls integriert sein oder getrennt von dem Sensor-IC ausgebildet sein. Eine Energieversorgung kann separat von dem Sensor-IC als Batteriespeicher oder auch als Generator, z.B. Piezo-Generator ausgebildet sein.

Der zusätzliche Speicher kann eine beliebige Art von dauerhaftem Speicher sein, z.B. ein Flash-Speicher (beispielhaft ein SPI[Serial Peripheral Interface] Flash-Speicher, z.B. von der Firma Micron).

Der Sensor bringt in diesem Zusatzspeicher sämtliche Informationen mit, die er für die Datenerfassung und Übermittlung gemäß Spezifikation unterschiedlicher Fahrzeughersteller benötigt. Es kann sich dabei um einzelne Parametersätze handeln, es kann sich jedoch auch um vollständige Programme oder Teilprogramme sowie alle anderen Arten von elektronisch speicherbaren Daten handeln.

In seinem Anfangszustand ist der Sensor in der Lage, auf den Zusatzspeicher zuzugreifen, der zusätzlich zu dem internen Speicher des Sensorsystems vorliegt. Der Sensor-IC verfügt dazu über eine Basis-Funktionalität, z.B. in Gestalt eines Bootloaders, welcher die Auswahlkennung von einem drahtlosen Kommunikationsgerät empfangen kann und die Kommunikation zum Umkopieren mit dem zusätzlichen Speicher abwickelt.

Dem Sensor werden beim Einbau am Fahrzeug Informationen übermittelt, welche ihm die Auswahl eines Konfigurationssatzes aus dem Zusatzspeicher ermöglichen. Beispielsweise wird eine numerische Kennung oder ein sonstiger Kennungssatz übermittelt. Dies kann auf die herkömmliche Weise geschehen, insbesondere mit einem drahtlosen System oder einer kurzzeitigen Kontaktierung. Als drahtlose Systeme sind sogenannte RDKS-Diagnosegeräte am Markt verfügbar und bekannt. Diese können verschiedene Kommandos im Niederfrequenzbereich senden. Die Datenübertragungsrate ist dabei eher gering, es ist jedoch nur ein kurzer Befehlssatz zu übermitteln, ähnlich wie bei einem konfigurierbaren Reifendrucksensor der oben bereits beschrieben wurde.

Der erfindungsgemäß vorgesehene zusätzliche Speicher ist unter Steuerung des Sensor-IC energetisch deaktivierbar oder in seiner Energieaufnahme reduzierbar, d.h. beispielsweise von der Energieversorgung. Der zusätzliche Speicher ist zwar fest in dem Sensorgehäuse aufgenommen und verbleibt dort dauerhaft, er ist aber nur für die anfängliche Speicherung zahlreicher unterschiedlicher Herstellerkonfigurationen vorgesehen.

Es ist dabei erfindungsgemäß auch möglich, bereits konfigurierte Sensoren in ihrer Konfiguration zu ändern, beispielsweise bei einer Fehlkonfiguration oder aber einem Fahrzeugwechsel.

Der vollständige Betrieb eines erfindungsgemäßen Zusatzspeichers ist nur vorgesehen, solange der Sensor noch nicht auf das Zielsystem konfiguriert ist. Als wesentlicher Unterschied zu einem Erweiterungsspeicher ist der Zusatzspeicher nach anfänglicher erster Konfiguration abschaltbar (oder in einen stark energiereduzierten passiven Modus zu versetzen). Es handelt sich also nicht um eine Speichererweiterung sondern einen temporär aktivierbaren Speicherbaustein. Es ist erfindungsgemäß vorgesehen, dass die vom Zusatzspeicher benötigten Informationen zur Konfiguration in dem internen Speicher der integrierten Schaltung (IC) des Sensors dauerhaft kopiert werden. Der interne Speicher des Sensors braucht nur so klein ausgebildet zu sein, dass er sicher die Daten und Programme für jede einzelne der möglichen Konfigurationen speichern kann (nicht jedoch verschiedene Konfigurationen gleichzeitig aufnehmen muss). Dadurch ist der Stromverbrauch im normalen Sensorbetrieb optimiert. Der Zusatzspeicher kann demgegenüber deutlich größer ausgebildet sein, da er nur kurzzeitig, nämlich bei der Konfiguration des Sensors energieversorgt ist. Nach erfolgreichem Umkopieren in den internen Speicher des Sensor-IC wird der Zusatzspeicher abgeschaltet, wobei die Abschaltung zumindest zeitweise erfolgt oder auch komplett dauerhaft.

Der so erstellte Sensor ist ein tatsächlicher Universalsensor, da er etliche Fahrzeugmodelle mit einem einzigen Sensor abdecken kann. Die Speicherknappheit wird weitgehend aufgehoben, dennoch wird das System in Betrieb nicht mehr Energie benötigen als ein herkömmlicher Reifendrucksensor, da der Mehrverbrauch an Energie nur für den Zeitraum der Konfiguration erforderlich ist und nach erfolgreichem Umkopieren der Zusatzspeicher abschaltbar ist. Der Zusatzspeicher kann dabei sowohl Übertragungsparameter als auch vollständige Applikationen aufnehmen. Der Zusatzspeicher kann, muss jedoch nicht, als getrenntes Bauelement von dem Sensor-IC ausgebildet sein und bei der Montage entsprechend einzeln zu bestücken sein. Dies erleichtert die Anpassung der Produktion neuer Sensoren für geänderte oder neue Fahrzeugsysteme.

Wesentlich ist, dass ein hinsichtlich der Strom-/Spannungsversorgung deaktivierbarer Zusatzspeicher mit erforderlichen Informationen ausgebildet und mit der Sensor-IC zeitweise koppelbar ist und dieser Speicher in dem Sensorgehäuse dauerhaft aufgenommen ist. Der Zusatzspeicher bleibt also tatsächlich Teil des Sensors, auch wenn er den wesentlichen Zeitraum der Lebensdauer des Sensors nicht aktiviert ist. Der wesentliche Vorteil dieses Universalsensors wird jedoch dadurch erreicht, dass der Sensor sämtliche Anpassungsfähigkeiten bereits mitbringt und nur noch eine Konfiguration hinsichtlich des gewünschten Zielsystems benötigt. Die eigentliche Programmierung der Sensor-IC läuft im Sensor selbst zwischen Zusatzspeicher und Sensor-IC ab und benötigt nur das Triggersignal zur Programmierung mit der entsprechenden Anweisung, welche Programmierung aus dem Zusatzspeicher in den Sensor-IC umzuspeichern ist. Da der Zusatzspeicher verdrahtet mit der Sensor-IC vorliegt, ist ein solcher Umspeichervorgang in äußerst geringer Zeit abgeschlossen, um Größenordnungen schneller als bei der Programmierung durch ein drahtloses Programmiergerät. Dieses System ist auch der Programmierung mit Hilfe von Kontaktstiften überlegen, da der Sensor keinerlei händische Manipulationen in Gestalt der Kopplung mit einer Programmiereinrichtung benötigt. Ein Monteur des entsprechenden Reifendrucksensors sendet lediglich ein Programmiersignal an den Sensor, dieses wird quittiert und intern im Sensor läuft der Umkopiervorgang. Nach erfolgreichem Umkopiervorgang kann ein Quittungssignal ausgegeben werden und anschließend kann der Sensor selbständig die Versorgung des Zusatzspeichers unterbrechen.

Der Mikrocontroller schaltet in den energiesparenden Modus des zusätzlichen Speichers, nachdem ein ausgewähltes Datenpaket von dem zusätzlichen Speicher in den internen Speicher kopiert wurde. Das erfindungsgemäße Konzept verringert die Konfigurationszeiten erheblich. Die gesamte Konfigurationszeit beträgt weniger als einige Sekunden und die Übertragung der weiteren Daten über die internen Leiterbahnen erlaubt eine fehlerfreie und schnelle Übertragung.

Hinsichtlich der Dauerhaftigkeit der Unterbindung einer Spannungsversorgung des Zusatzspeichers sind zahlreiche Gestaltungen möglich. Beispielsweise kann der Sensor-IC den Zusatzspeicher tatsächlich nur kurzzeitig aktivieren, solange ein Programmiervorgang erfolgt. Der Sensor-IC kann jedoch auch diese Versorgung reaktivierbar halten, wobei der Sensor dann auch nach erstmaliger Konfiguration umprogrammierbar wäre, um ein anderes Konfigurationsschema aus dem Zusatzspeicher zu übernehmen. Dazu würde nach Empfang eines entsprechenden Signals durch dien Sensor-IC der Zusatzspeicher wieder aktiviert, also mit Spannung versorgt und ein anderer Programm- oder Datenbereich aus dem Zusatzspeicher in den Sensor-IC umkopiert.

Die Datenverbindung zwischen Sensor-IC und Zusatzspeicher kann für das Umkopieren verschlüsselt werden. Beispielsweise können dazu die Daten bereits verschlüsselt im Zusatzspeicher hinterlegt sein und der Sensor-IC verfügt über die Programmierung, die entsprechende Verschlüsselung beim Vorgang des Umkopierens aufzuheben, so entschlüsselte Informationen in den Sensor-IC umgespeichert werden.

Eine solche Verschlüsselung erschwert die unerlaubte Kopie eines Reifendrucksensors und die Manipulation der Programmierungen.

Die Daten im Zusatzspeicher können auch auf den jeweiligen konkreten Sensor hin verschlüsselt sein, so dass für jeden einzelnen Sensor ein anderer Schlüssel generiert ist. Dann kann der Zusatzspeicher nur mit dem zugehörigen, individuellen Sensor-IC verwendet werden. Dies erhöht weiter die Sicherheit bei einem derartigen sicherheitsrelevanten Konzept.

Es kann grundsätzlich auch vorgesehen sein, dass über der Sensor-IC auch der Zusatzspeicher beschreibbar ist. Dies bedeutet, dass ein Universalsensor der erfindungsgemäßen Art in einem dann ggf. länger andauernden Programmiervorgang mit einem neuen Inhalt für den Zusatzspeicher versorgt werden kann. Dies ist beispielsweise bei Updates oder bei Konfiguration auf weitere Fahrzeuge hilfreich. Da eine solche Umprogrammierung jedoch nicht unmittelbar bei der Montage stattfindet, sondern auf Herstellerseite, ist dieser Vorgang nicht so zeitkritisch und die Möglichkeit erhöht den Nutzwert eines derartigen Universalsensors weiter.

Es ist eine bevorzugte Gestaltung des Sensors, wenn die Spannungsversorgung des Zusatzspeichers komplett deaktivierbar oder reduzierbar ist.

Zwar wird bereits erheblich Energie eingespart, wenn erfindungsgemäß der Zugriff auf den zusätzlichen Speicherbaustein unterbunden wird, eine tatsächliche Abschaltung optimiert den Strombedarf der gesamten Einrichtung jedoch erheblich.

In einer besonders bevorzugten Gestaltung des Reifendrucksensors ist die Verbindung des zusätzlichen Speichers mit der Sensor-IC als serielle Schnittstelle ausgebildet. Besonders vorteilhaft ist es, diese Schnittstelle aus einer einzigen elektrischen Leitung zu realisieren.

Diese Gestaltung erlaubt eine äußerst kostengünstige und einfache Gestaltung. Es ist möglich, eine standardisierte oder am Markt vorgefertigte Sensor-IC zu verwenden, solange diese eine Ansteuerung der einzelnen Datenleitung erlaubt. Oft haben die Mikrocontroller der Sensor-ICs, welche am Markt verfügbar sind, eine freie Kontaktierung, welche die Nutzung als serielle Schnittstelle erlaubt. Beispielsweise sind am Markt verfügbare Sensor-ICs wie die von der Firma freescale (z.B. FXTH87) einsetzbar.

Zwar ist die Datenübertragung zwischen Sensor-IC und zusätzlichem Speicher bei serieller Kommunikation vergleichsweise langsam, der Zugriff auf den zusätzlichen Speicher erfolgt jedoch nur einmalig, nämlich für den Vorgang des Umkopierens. Dabei ist die langsame Datenübertragung unerheblich, da die übertragene Datenmenge immer noch deutlich schneller übertragen wird als bei einer Programmierung über ein drahtloses Programmiergerät. Darüber hinaus läuft der Vorgang des Umkopierens gänzlich im Sensor selbst ab, ein Monteur kann nach antriggern des Konfigurationsvorgangs in seiner Montagearbeit weiter voranschreiten, während der Sensor intern den Speicher programmiert und anschließend den Zusatzspeicher deaktiviert.

Bei dieser Gestaltung ist es nicht erforderlich eine aufwendige Schnittstelle oder sogar ein Bus-System zwischen Sensor-IC und zusätzlichem Speicher zu etablieren. Die bitweise, serielle Übertragung ist mit minimalem baulichen Aufwand realisierbar, eine einzige Leiterbahn genügt.

Die Erfindung wird nun anhand der beiliegenden Zeichnung näher erläutert.
Figur 1 zeigt schematisch den Aufbau eines erfindungsgemäßen Universalsensors.
Figur 2 zeigt schematisch die Speicheraufteilung eines internen Speichers und eines zusätzlichen Speichers im erfindungsgemäßen Reifendrucksensor.

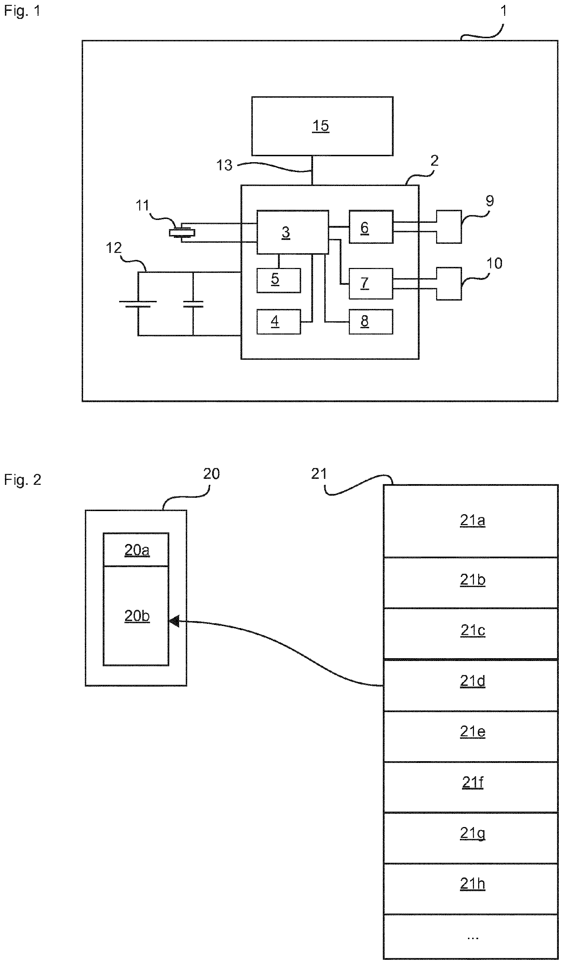

In Figur 1 ist ein Sensor in schematischer Darstellung gezeigt. Ein Gehäuse 1 umfasst sämtliche Komponenten des Sensors. In das Gehäuse 1 kann sich bei bestimmten Ausbildungsformen beispielsweise ein Ventilschaft eines Reifendruckventils erstrecken oder es kann mit dem Gehäuse 1 gekoppelt sein. Bei anderen Sensoren ist das Gehäuse 1 unabhängig von dem Ventilschaft im Reifen an anderer Stelle angeordnet, z.B. in der Lauffläche.

In dem Gehäuse 1 ist ein Sensor-IC 2 angeordnet. Der Sensor-IC enthält eine integrierte Schaltung mit einem Mikrocontroller 3. Als Sensoren sind im Sensor-IC 2 in diesem Ausführungsbeispiel ein Drucksensor 4, ein Temperatursensor 5 und ein Beschleunigungssensor 8 vorgesehen. Eine in der Sensor-IC 2 integrierte Hochfrequenz(HF)-Sendeeinheit 6 ist mit einer separat ausgebildeten HF-Antenne 9 gekoppelt. Eine auf der Sensor-IC 2 angeordnete niederfrequente (LF) Empfangseinheit 7 ist mit einer separat ausgebildeten LF-Spule 10 gekoppelt.

Der Sensor-IC 2 wird durch eine Energiequelle (z.B. Batteriespeicher mit Speicherkondensator oder einen Piezogenerator) vorsorgt, die insgesamt als Energieversorgung 12 bezeichnet wird. Ein Schwingquarz 11 ist als Taktgeber für die HF-Kommunikation ausgebildet. In anderen Ausführungsbeispielen können weniger oder mehr Sensoreinrichtungen ausgebildet sein. Auch der Schwingquarz 11 kann auf der Sensor-IC integriert sein. Schließlich ist es auch nicht zwingend erforderlich, Sende- und Empfangseinheiten für unterschiedliche Frequenzbereiche auszubilden, wenn als Kommunikationsprotokoll ein einheitliches Protokoll sowohl für den Empfang als auch die Aussendung von Informationen verwendet wird. Dafür können beispielsweise auch andere hochfrequente Protokolle, z.B. Bluetooth-Kommunikation in Frage kommen.

In dem gezeigten Ausführungsbeispiel ist ein Zusatzspeicher 15 separat von der Sensor-IC 2 ausgebildet. Der Zusatzspeicher 15 ist mit der Sensor-IC 2 über eine einzelne Datenleitung 13 verbunden, so dass eine serielle Datenkommunikation zwischen der Sensor-IC 2, insbesondere dem Mikrocontroller 3 und dem Zusatzspeicher 15 möglich ist. Zusätzlich zu der Datenleitung 13 können Versorgungsleitungen (Spannung) und Wake-up Leitungen zu dem Zusatzspeicher führen (nicht gezeigt).

Der Sensor-IC 2 selbst verfügt über einen internen Speicher, der deutlich kleiner ist als der Zusatzspeicher 15. Im Ausführungsbeispiel ist der Sensor-IC 2 beispielsweise mit einem 8kB großen internen, dauerhaften Speicher versehen, der im dargestellten Beispiel mit dem Mikrocontroller 3 zusammengefasst ist.

Der interne Speicher der Sensor-IC 2 verfügt über eine Basisfunktionalität in Gestalt gespeicherter Anweisungen, im Weiteren als sogenannter Bootloader bezeichnet. Der Bootloader koordiniert anfänglich die Kommunikation des Sensors mit der Außenwelt. Im gezeigten Beispiel ist ein LF-Empfang über die LF-Spule 10 und die LF-Empfangseinheit 7 unter Steuerung des Bootloaders im Mikrocontroller 3 möglich. Es wird mittels eines externen Steuergeräts (RDKS-Diagnosegerät, nicht gezeigt) eine Datensatzkennung über die LF-Schnittstelle an den Mikrocontroller übermittelt und der Mikrocontroller 3 greift über die serielle Verbindung 13 auf den Zusatzspeicher 15 zu und ruft gemäß der übermittelten Kennung einen Speicherbereich ab. Der entsprechende Speicherbereich wird dann unter Kontrolle des Bootloaders von dem Zusatzspeicher 15 über die serielle Verbindung 13 in den internen Speicher der Sensor-IC 2 umkopiert und dort dauerhaft gespeichert. Nach erfolgreichem Kopiervorgang weist dann der Sensor-IC 2 im internen Speicher sowohl den Bootloader als auch eine ausführbare Applikation auf, die den dauerhaften Betrieb des Sensors 1 gemäß der programmierten Konfiguration zulässt.

Figur 2 verdeutlicht den Vorgang und die Speicheraufteilung in schematischer Weise. Die Aufteilung des internen Speichers der Sensor-IC 2 ist mit dem Bezugszeichen 20 versehen. Die Aufteilung 21 des Zusatzspeichers gibt das Schema des physisch in dem Speicherbaustein 15 aus Figur 1 aufgenommenen Speichers wieder.

Der interne Speicher 20 verfügt über einen Speicherabschnitt 20a, in dem dauerhaft der Bootloader und die Basisfunktionen der Sensor-IC 2 gespeichert sind. Ein Abschnitt 20b ist für die Aufnahme der verschiedenen Konfigurationen von Parametern und Applikationen aus dem Zusatzspeicher 21 vorgesehen und wird für die Abarbeitung des Normalbetriebs nach erfolgreicher Konfiguration aufgerufen.

Der Zusatzspeicher 21 verfügt in einem adressierbaren Speicherbereich 21a, in welchem gemäß diesem Ausführungsbeispiel ein Konfigurationsverzeichnis 21a abgespeichert ist. Dieses Konfigurationsverzeichnis adressiert Speicherbereiche 21b,..., 21h in Zuordnung zu verschiedenen Kennungen. Beispielsweise kann gemäß dem gespeicherten Konfigurationsverzeichnis einer Kennung #1 der Speicherbereich von den Speicheradressen 500 - 8000 zugeordnet sein. Einem Speicherbereich #2 sind die Adressbereiche 8000 - 14500 zugeordnet, einem Speicherbereich #3 die Speicheradressen 14500 - 21500 usw. Diese entsprechenden Speicherabschnitte sind in der Figur 2 schematisch durch die Abschnitte 21b, 21c,..., 21h dargestellt. Selbstverständlich können auch mehr oder weniger Speicherbereiche realisiert werden.

Jeder der adressierbaren Speicherbereiche enthält Daten, die für die Konfiguration des Sensors zwecks Anpassung auf eine Fahrzeuggruppe erforderlich sind. Es sind beispielsweise Parameter gespeichert, welche das Format eines vom Sensor an das Fahrzeug zu sendende Datentelegramm definieren. Es können auch vollständige und angepasste Programmcodes hinterlegt sein.

Bei Abarbeitung der Anweisungen des Bootloaders im Speicherbereich 20a wird übermittelt, welche Konfiguration aus dem Zusatzspeicher 21 abzurufen ist. Diese Konfigurationskennung wurde von außen, z.B. mit einem LF-Kommunikationsgerät übermittelt. Anschließend wird zwischen der Sensor-IC 2 und dem Zusatzspeicher 15 eine serielle Kommunikation aufgebaut und es wird in Speicherabschnitt 21a der Adressbereich nachgeschlagen, welcher das der Konfigurationskennung entsprechende Datenpaket enthält. In dem gezeigten Beispiel ist dies der Speicherbereich 21d. Der Inhalt dieses Speicherbereichs wird anschließend über die serielle Schnittstelle in den Speicherbereich 20b umkopiert.

Es braucht dabei nicht unbedingt der gesamte Speicherbereich 20b überschrieben zu werden. Je nachdem, welche Funktionen und Daten im internen Speicher bereits vorhanden sind, ist es auch möglich, lediglich spezifische Parameter oder Programmabschnitte für eine individuelle Konfiguration umzukopieren.

Nach erfolgreichem Umkopieren enthält der Speicherbereich 20b dauerhaft die gewünschte, auf die zukünftige Anwendung konfigurierte Applikation. Im normalen Betriebsmodus kann dann sowohl die Erfassung der Sensorwerte, insbesondere der Reifendruckwerte über den Reifendrucksensor 4 gemäß der Konfiguration erfolgen, als auch die Übermittlung der erfassten Daten gemäß der auf das Fahrzeug angepassten Konfigurationsdaten. Es ist also durchaus möglich, dass der eigentliche Erfassungsvorgang gemäß umkopierter Konfiguration erfolgt. Zum Beispiel kann der Sensor die Fähigkeit zur Erfassung der Beschleunigung hardwareseitig mitbringen, die Messung der Beschleunigung wird aber nur bei einigen der Konfigurationen erfasst. Der Sensor kann alternativ auch sämtliche Daten erfassen, die Übertragung der Daten jedoch in Abhängigkeit von der Konfiguration anpassen, z.B. nur einen Teil der Daten übertragen. In jedem Fall ist die Art der Übertragung, also z.B. die Struktur des Datentelegramms zur Übermittlung der Daten an das Fahrzeug anpassbar.

Der Zusatzspeicher 15 wird in diesem Beispiel nach erfolgreicher Kommunikation deaktiviert. In diesem Beispiel bedeutet dies, dass der Zusatzspeicher 15 im Normalbetrieb nicht mehr angesteuert wird, die serielle Schnittstelle 13 also nicht mehr genutzt wird. Eine Spannungsversorgung des Zusatzspeichers 15 kann in diesem Ausführungsbeispiel dann außerdem gänzlich abgeschaltet werden, um den Stromverbrauch weiter zu reduzieren.

## Patentansprüche

1. Reifendrucksensor für Kraftfahrzeuge, aufweisend:
ein Gehäuse (1),
eine in dem Gehäuse (1) aufgenommene integrierte Schaltung (Sensor-IC) (2), wobei die Sensor-IC einen Mikrocontroller (3) und einen Drucksensor (4) aufweist,
wobei in dem Gehäuse (1) Mittel (6, 9; 7, 10) zur drahtlosen Kommunikation angeordnet sind, welche mit dem Mikrocontroller (3) gekoppelt sind, um mittels des Drucksensors (4) erfasste Druckmesswerte an eine entfernte Empfangseinrichtung zu übermitteln,
wobei die Sensor-IC (2) einen internen Speicher aufweist, in welchem ausführbare Anweisungen und Daten speicherbar sind, welche bei Ausführung die Erfassung und Übermittlung von Druckmessdaten bewirken,
wobei eine Spannungsversorgung (12) in dem Gehäuse (1) angeordnet und mit der Sensor-IC (2) gekoppelt ist,
dass die Sensor-IC (2) mit einem im Gehäuse (1) angeordneten zusätzlichen Speicherbaustein (15) gekoppelt ist, wobei in dem Speicherbaustein eine Mehrzahl von unterschiedlichen Datenpaketen mit jeweiligen Anweisungen oder Daten gespeichert sind,
**dadurch gekennzeichnet, dass**
der zusätzliche Speicherbaustein (15) durch den Mikrocontroller (3) ansteuerbar ist, um ein ausgewähltes Datenpaket in den internen Speicher zu kopieren und der Mikrocontroller derart mit den Mitteln zur drahtlosen Kommunikation gekoppelt ist, dass eine Selektion eines im zusätzlichen Speicher gespeicherten Datenpakets über die Mittel zur drahtlosen Kommunikation erfolgt und der Mikrokontroller anschließend das selektierte Datenpaket aus dem zusätzlichen Speicher in den internen Speicher kopiert,
wobei der Mikrocontroller (3) die Spannungsversorgung des zusätzlichen Speicherbausteins (15) derart kontrolliert, dass der zusätzliche Speicher in einen energiesparenden Modus schaltbar ist und wobei der Mikrocontroller in den energiesparenden Modus des zusätzlichen Speichers schaltet, nachdem ein ausgewähltes Datenpaket von dem zusätzlichen Speicher in den internen Speicher kopiert wurde.

2. Reifendrucksensor nach Anspruch 1, wobei der Mikrocontroller (13) eine Spannungsversorgung des zusätzlichen Speicherbausteins (15) reduziert oder vollständig unterbricht, um den energiesparenden Modus einzuschalten.

3. Reifendrucksensor nach einem der vorangehenden Ansprüche, wobei die Mittel zu drahtlosen Kommunikation Sendemittel für hochfrequente Signale aufweisen und Empfangsmittel für niederfrequente Signale.

4. Reifendrucksensor nach einem der vorangehenden Ansprüche, wobei der zusätzliche Speicherbaustein zusammen mit dem Sensor-IC auf einer Platine angeordnet ist und beabstandet vom Sensor-IC auf der Platine platziert ist.

5. Reifendrucksensor nach einem der vorangehenden Ansprüche, wobei der zusätzliche Speicherbaustein über eine serielle Datenschnittstelle mit dem Mikrocontroller der Sensor-IC gekoppelt ist.

6. Verfahren zum Betreiben eines Reifendrucksensors für Kraftfahrzeuge, aufweisend die Schritte:
- drahtloses Übertragen einer Auswahlkennung mittels eines Übertragungsgerätes an den Reifendrucksensor;
- vorübergehendes Aktivieren und Betreiben eines in dem Reifendrucksensor angeordneten Zusatzspeichers mit Hilfe einer im Reifendrucksensor angeordneten Sensor-IC und Übertragen eines der Auswahlkennung entsprechenden Speicherbereichs aus dem Zusatzspeicher in einen kleineren Speicher einer Sensor-IC;
- Deaktivieren des Zusatzspeichers nach erfolgtem Kopiervorgang, wobei der Zusatzspeicher von einer Energieversorgung getrennt wird oder die Energieversorgung des Zusatzspeichers reduziert wird.

7. Verfahren nach Anspruch 6, wobei die Auswahlkennung über eine LF-Signalverbindung an eine LF-Empfangseinrichtung im Reifendrucksensor übertragen wird.

8. Verfahren nach Anspruch 6 oder 7, wobei der Speicherbereich von dem Zusatzspeicher über eine serielle Datenverbindung an die Sensor-IC und deren internen Speicher übertragen wird.

## Claims

1. Tyre pressure sensor for motor vehicles, comprising:
a housing (1),
an integrated circuit (sensor IC) (2) accommodated in the housing (1), wherein the sensor IC includes a microcontroller (3) and a pressure sensor (4),
wherein means (6, 9; 7, 10) for wireless communication, which are coupled with the microcontroller (3), are arranged in the housing (1) in order to transmit pressure values measured by means of the pressure sensor (4) to a remote receiver device,
wherein the sensor IC (2) has an internal memory in which executable instructions and data are stored, which, on being executed, initiate the measurement and transmission of measured pressure values,
wherein a voltage supply (12) is arranged in the housing (1) and is coupled with the sensor IC (2),
wherein the sensor IC (2) is coupled with an additional memory module (15) arranged in the housing (1), wherein a plurality of different data packets, each containing instructions or data, are stored in the memory module,
**characterised in that**
the additional memory module (15) can be actuated by the microcontroller (3), in order to copy a selected data packet into the internal memory, and the microcontroller is coupled with the means for wireless communication such that a selection of a data packet stored in the additional memory takes place via the means for wireless communication and the microcontroller then copies the selected data packet from the additional memory into the internal memory,
wherein the microcontroller (3) controls the voltage supply of the additional memory module (15) such that the additional memory can be switched into an energy-saving mode and wherein the microcontroller switches into the energy-saving mode of the additional memory after a selected data packet has been copied from the additional memory into the internal memory.

2. Tyre pressure sensor according to claim 1, wherein the microcontroller (13) reduces or completely interrupts a voltage supply of the additional memory module (15), in order to actuate the energy-saving mode.

3. Tyre pressure sensor according to one of the preceding claims, wherein the means for wireless communication include transmission means for high-frequency signals and receiving means for low-frequency signals.

4. Tyre pressure sensor according to one of the preceding claims, wherein the additional memory module, together with the sensor IC, is arranged on a printed circuit board and is positioned on the printed circuit board at a distance from the sensor IC.

5. Tyre pressure sensor according to one of the preceding claims, wherein the additional memory module is coupled with the microcontroller of the sensor IC via a serial data interface.

6. Method for operating a tyre pressure sensor for motor vehicles, comprising the steps:
- wireless transmission of a selection identifier to the tyre pressure sensor by means of a transmission device;
- temporary activation and operation of an auxiliary memory arranged in the tyre pressure sensor with the aid of a sensor IC arranged in the tyre pressure sensor and transmission of a memory area corresponding to the selection identifier from the auxiliary memory into a smaller memory of a sensor IC;
- deactivation of the auxiliary memory following the copying action, wherein the auxiliary memory is disconnected from an energy supply or the energy supply to the auxiliary memory is reduced,

7. Method according to claim 6, wherein the selection identifier is transmitted via an LF signal connection to an LF receiver device in the tyre pressure sensor.

8. Method according to claim 6 or 7, wherein the memory area of the auxiliary memory is transmitted via a serial data connection to the sensor IC and its internal memory.

## Revendications

1. Capteur de pression de pneu pour véhicules automobiles, comportant :
un boîtier (1),
un circuit intégré (CI capteur) (2) placé dans le boîtier (1), le CI capteur comportant un microcontrôleur (3) et un capteur de pression (4),
dans lequel des moyens (6, 9 ; 7, 10) qui sont destinés à une communication sans fil et qui sont couplés au microcontrôleur (3) sont agencés dans le boîtier (1) dans le but de transmettre des valeurs de pression mesurées détectées au moyen du capteur de pression (4) à un dispositif de réception distant,
dans lequel le CI capteur (2) comporte une mémoire interne dans laquelle peuvent être enregistrées des instructions exécutables et des données qui provoquent lors de l'exécution la détection et la transmission de données mesurées de pression,
dans lequel une alimentation en tension (12) est agencée dans le boîtier (1) et est couplée au CI capteur (2),
dans lequel le CI capteur (2) est couplé à un composant de mémoire supplémentaire (15) agencé dans le boîtier (1),
dans lequel plusieurs paquets de données différents avec des instructions respectives ou des données respectives sont mémorisés dans le composant de mémoire,
**caractérisé en ce que**
le composant de mémoire supplémentaire (15) peut être commandé par le microcontrôleur (3) pour copier un paquet de données sélectionné dans la mémoire interne et le microcontrôleur est couplé de telle sorte aux moyens destinés à une communication sans fil qu'une sélection d'un paquet de données mémorisé dans la mémoire supplémentaire s'effectue par l'intermédiaire des moyens destinés à la communication sans fil et le microcontrôleur copie ensuite le paquet de données sélectionné de la mémoire supplémentaire à la mémoire interne,
dans lequel le microcontrôleur (3) contrôle l'alimentation en tension du composant de mémoire supplémentaire (15) de telle sorte que la mémoire supplémentaire peut être commutée dans un mode d'économie d'énergie et dans lequel le microcontrôleur commute dans le mode d'économie d'énergie de la mémoire supplémentaire après qu'un paquet de données sélectionné a été copié de la mémoire supplémentaire à la mémoire interne.

2. Capteur de pression de pneu selon la revendication 1, dans lequel le microcontrôleur (13) réduit ou interrompt complètement une alimentation en tension du composant de mémoire supplémentaire (15) pour commuter vers le mode d'économie d'énergie.

3. Capteur de pression de pneu selon l'une des revendications précédentes, dans lequel les moyens destinés à une communication sans fil comportent des moyens d'émission pour des signaux à haute fréquence et des moyens de réception pour des signaux à basse fréquence.

4. Capteur de pression de pneu selon l'une des revendications précédentes, dans lequel le composant de mémoire supplémentaire est agencé conjointement avec le CI capteur sur une carte et est placé à une certaine distance du CI capteur sur la carte.

5. Capteur de pression de pneu selon l'une des revendications précédentes, dans lequel le composant de mémoire supplémentaire est couplé au microcontrôleur du CI capteur par l'intermédiaire d'une interface de données sérielle.

6. Procédé pour faire fonctionner un capteur de pression de pneu pour des véhicules automobiles, comportant les étapes suivantes :
- transmission sans fil d'un identificateur de sélection au capteur de pression de pneu au moyen d'un appareil de transmission ;
- activation provisoire et exploitation d'une mémoire supplémentaire agencée dans le capteur de pression de pneu à l'aide d'un CI capteur agencé dans le capteur de pression de pneu et transmission d'une zone de mémoire, correspondant à l'identificateur de sélection, de la mémoire supplémentaire à une mémoire plus petite d'un CI capteur ;
- désactivation de la mémoire supplémentaire une fois l'opération de copie effectuée, la mémoire supplémentaire étant séparée d'une alimentation en énergie ou l'alimentation en énergie de la mémoire supplémentaire étant réduite.

7. Procédé selon la revendication 6, dans lequel l'identificateur de sélection est transmis à un dispositif de réception LF dans le capteur de pression de pneu par l'intermédiaire d'une liaison de signal LF.

8. Procédé selon la revendication 6 ou 7, dans lequel la zone de mémoire est transmise de la mémoire intermédiaire au CI capteur et à la mémoire interne de celui-ci par l'intermédiaire d'une liaison de données sérielle.
